# EUROPÄISCHE PATENTSCHRIFT

(11) **EP 0 520 203 B1**
(45) Veröffentlichungstag und Bekanntmachung des Hinweises auf die Patenterteilung: **19.08.1998**
(21) Anmeldenummer: 92109039.5
(22) Anmeldetag: 29.05.1992
(51) Int. Cl.: H01P 1/12, H04B 1/74

(54) **Kanalauswahlschaltung**
Channel selection circuit
Circuit de sélection de canaux

(30) Priorität: 28.06.1991 DE 4121399
(43) Veröffentlichungstag der Anmeldung: 30.12.1992
(73) Patentinhaber: ROBERT BOSCH GMBH, 70442 Stuttgart (DE)
(72) Erfinder: Hahn, Peter, Dipl.-Ing., W-7150 Backnang (DE); Schuff, Herbert, Dipl.-Ing., W-7150 Backnang (DE)

(56) Entgegenhaltungen:
- WO-A-90/00316
- US-A- 4 061 989
- US-A- 4 330 766
- US-A- 4 644 301
- COMSAT TECHNICAL REVIEW Bd. 6, Nr. 2, 1976, Washington, US, SS 309-322; F. ASSAL ET AL.: 'Network topologies to enhance the reliability of communications satellites'

## Beschreibung

Die Erfindung bezieht sich auf eine Kanalauswahlschaltung gemäß Oberbegriff des Anspruches 1.
Solche Kanalauswahlschaltungen sind bekannt, insbesondere im Zusammenhang mit Redundanzschaltungen in Kommunikationssatelliten.
Die Aufgabe besteht darin, immer dafür zu sorgen, daß möglichst viele funktionsfähige Kanalpfade, bestehend aus Basisbandverstärkern, Filtern, usw. vorhanden sind. Da im Verlauf eines Satelittenlebens durchaus mit Ausfällen dieser Verstärker und anderer Baugruppen zu rechnen ist, wird ein solches Sateelitenkommunikationssystem meist mit Redundanz ausgerüstet. Aufgabe dieser Kanalauswahlschaltung ist es also, die Ausgänge beispielsweise von funktionstüchtigen Kanalverstärkern mit den Eingängen von funktionsfähigen Frequenzumsetzern zu verbinden und dies möglichst dämpfungsarm.

Mit anderen Worten besteht die Aufgabe einer Kanalauswahlschaltung darin, aus einer beliebigen Zahl von m Eingangssignalen beliebige k Signale auszuwählen und dabei eine möglichst geringe Zahl von Schalterdurchgängen mit dem Ziel einer möglichst geringen Dämpfung zu erreichen.
Die Aufgabe einer Redundanzschaltung läßt sich wie folgt umreißen: Sie soll eine Verzweigung von gewählten k Signalen auf beispielsweise Verstärker ermöglichen und zwar so, daß alle Kombinationen k aus n möglich sind. Auch hier besteht wiederum die Nebenforderung nach einer geringen Zahl von Schalterdurchgängen mit dem Ziel einer möglichst geringen Dämpfung. Selbstverständlich ist die Verzweigung nicht auf Verstärker begrenzt, sondern der Begriff Verstärker steht nur stellvertretend für allgemeine Begriffe wie Signale, Kanäle, Filter und andere Baugruppen, welche miteinander zu verschalten sind.
Dementsprechend gilt das für die Auswahl und Verteilung Ausgesagte auch spiegelbildlich für die Zusammenführung und für die Zuordnung auf der Ausgangsseite der Kanalauswahlschaltung bzw. Redundanzschaltung.

Der bekannte Stand der Technik benutzte bisher die Hintereinander- Schaltung mehrerer Schaltmatrizen, um die Aufgaben der Kanalauswahlschaltung und die Aufgaben der Redundanzschaltung annähernd zu erfüllen. Nachteilig ist dabei, daß der Aufwand von Schaltern sehr groß wird, je größer die geforderte Flexibilität bzw. je größer die geforderte Erreichbarkeit ist. Gekoppelt mit diesem hohen Schalteraufwand ist auch in ungünstigen Schaltzuständen die große Anzahl von hintereinander geschalteten Schalterdurchgängen und die damit verbundene hohe Dämpfung.

Zum Durchschalten werden Hohlleiterschalter benutzt, wie sie in ähnlicher oder gleicher Weise zum Beispiel aus den deutschen Offenlegungsschriften 29 24 969 und 37 03 378 bekannt geworden sind. Das Gehäuse dieser bekannten Hohlleiterschalter hat auf seinem Umfang vier gleichmäßig verteilte Hohlleiteranschlüsse und einen im Gehäuse angeordneten Rotor, der Hohlleiterdurchgänge zur unterschiedlichen Verbindung der vier Hohlleiteranschlüsse in verschiedenen Schaltstellungen aufweist. Zwei dieser Hohlleiterdurchgänge sind Bogenstücke, die zur Verbindung zweier benachbarter Hohlleiteranschlüsse dienen. Ein in gleicher Ebene wie die Bogenstücke angeordneter gerader Hohlleiterdurchgang dient zur Verbindung gegenüberliegender Hohlleiteranschlüsse in zwei anderen Schaltungen.

Redundanzschaltungen, die im Falle eines Ausfalls auf Ersatzgeräte umschalten, sind aus US 4,644,301, US 4,330,766, US 4,061,989, WO 90/00316 oder aus COMSAT Technical Review, Band 6, Nr. 2, 1976, Seiten 309 - 322 bekannt. Bei letzter Druckschrift sind Vier-Positions-R-Schalter auf einem Ring angeordnet, wobei jeweils ein Anschlußpaar mit jeweils benachbarten Schaltern verbunden ist. Von den anderen Anschlußpaaren wird bei einigen Schaltern ein Anschlußpunkt zur Brückenbildung benutzt und der andere Anschlußpunkt dient als Ausgang bzw. Anschlußpunkt zu einem weiteren Ring. Höchstens jeder dritte Schalter wird zur Brückenbildung verwendet.

Der vorliegenden Erfindung lag die Aufgabe zugrunde, eine Kanalauswahlschaltung mit gleichzeitiger Redundanzfunktion unter Benutzung eines einzigen Ringes anzugeben, welche in der Lage ist, eine größere Flexibilität bei der Auswahl der zu betreibenden Transponderkanäle in Satellitenkommunikationssystemen zu bieten. Diese größere Flexibilität sollte mit einem möglichst geringen zusätzlichen Schalteraufwand erreicht werden. Gleichzeitig soll auch die Anzahl hintereinander geschalteter Schalterdurchgänge begrenzt sein, d.h. eine gewisse Dämpfung nicht überschreiten.

Diese Aufgabe wurde gelöst mit den Merkmalen des Patentanspruches 1. Vorteilhafte Ausgestaltungen beinhalten die Unteransprüche.

Die erfindungsgemäße Kanalauswahlschaltung benötigt wenig zusätzliche Schalter und ermöglicht eine wesentlich höhere ja sogar volle Erreichbarkeit und Flexibilität. Gleichzeitig wird eine bestimmt Anzahl von Schalterdurchgängen nicht überschritten, was eine wesentlich geringere Einfügungsdämpfung beinhaltet. Die Einsparung von Schaltern bedeutet auch geringeres Volumen und geringere Masse für die Satellitennutzlast und weniger Aufwand für Telecommand und Telemetrie-Signale.

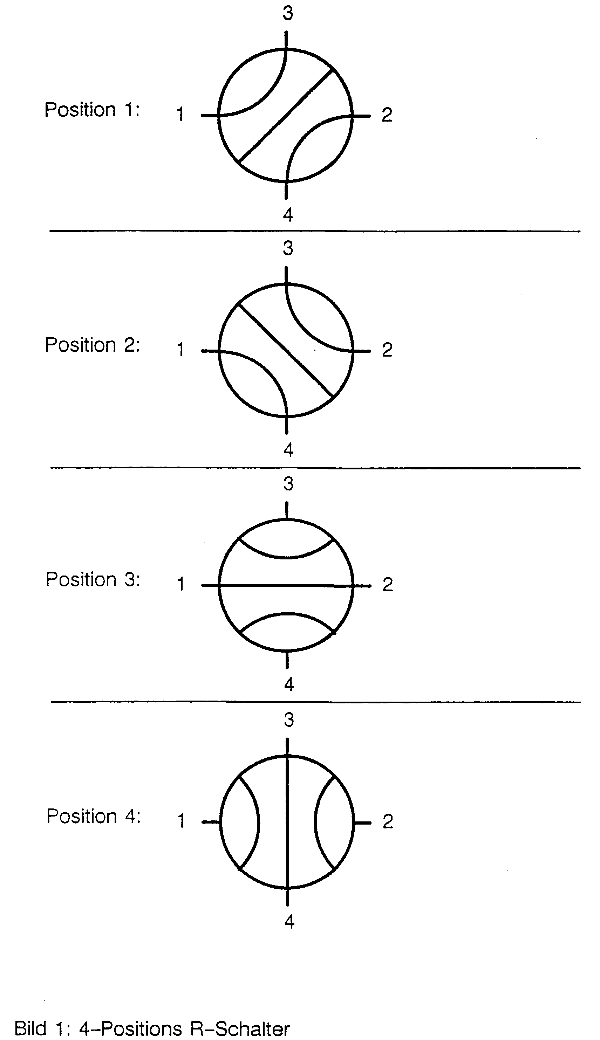

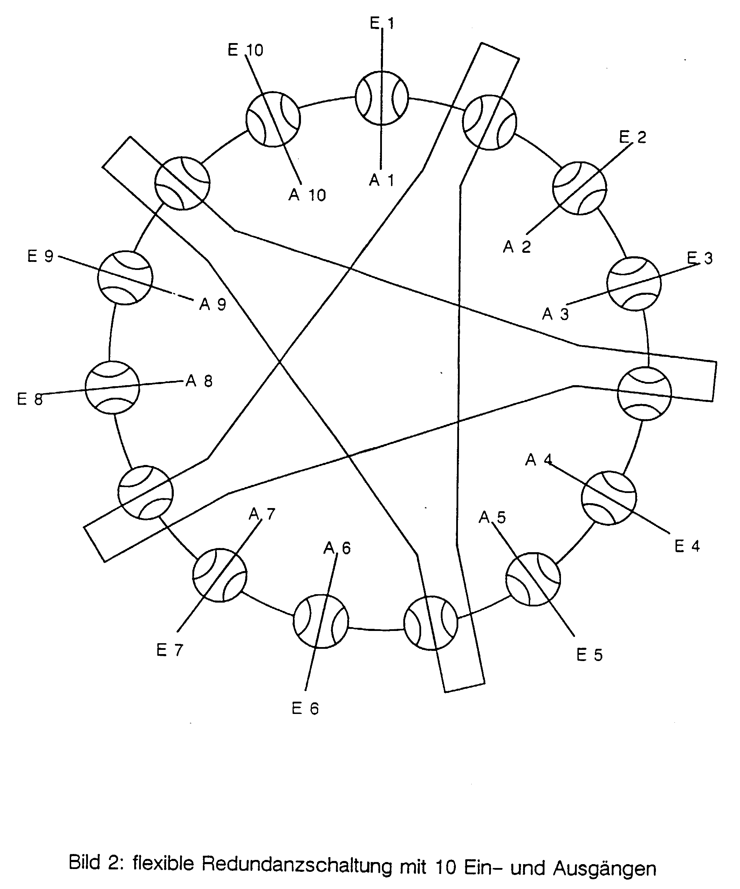

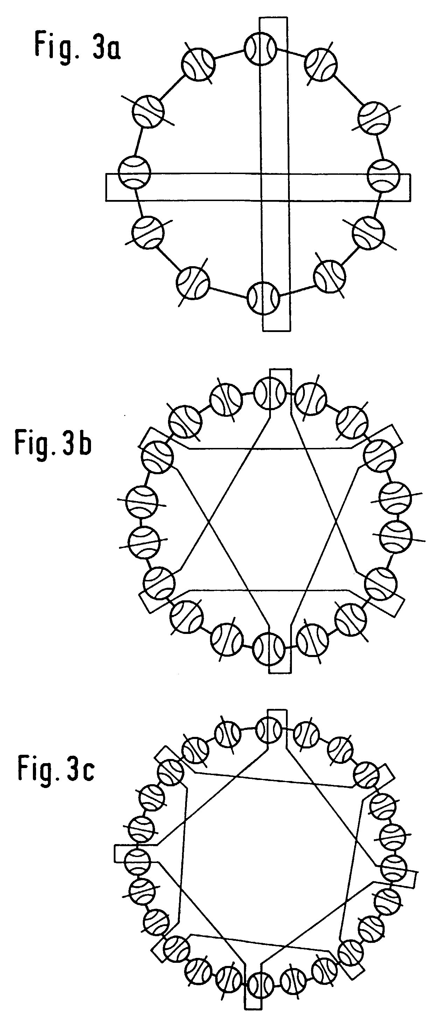

Die Erfindung ging aus von der Grundidee, die Kanalauswahlschaltung und die Redundanzschaltung zu kombinieren und damit eine flexible echte Redundanzschaltung zu schaffen. Zu beachten war dabei, daß die Verbindungswege genau einen Anfangspunkt und genau einen Endpunkt haben müssen und daß Verzweigungen und Verknüpfungen nicht erlaubt sind. Geeignete Schalter für die Auswahl sind sogenannte Vierpositions-R-Schalter. Diese Vierpositionsschalter sind in Figur 1 dargestellt, sie haben vier Anschlußpunkte 1, 2, 3 und 4 und drei Brücken. Die jeweils gegenüberliegenden Anschlußpunkte 1 und 2 bzw. 3 und 4 werden über die mittlere Brücke durchgeschaltet. Nebeneinanderliegende Anschlüsse können über die beiden äußeren krummen Brücken jeweils zweipolig durchgeschaltet werden. In den Positionen 3 und 4, bei denen jeweils gegenüberliegende Anschlußpunkte durchgeschaltet sind, sind die jeweils anderen gegenüberliegenden Anschlußpunktpaare aufgetrennt, d.h. hier wird nur einpolig durchgeschaltet, während bei den anderen Positionen 1 und 2, bei denen die Schalterbrücke jeweils unter 45° steht, eine zweipolige Durchschaltung vorliegt. In Figur 2 ist eine flexible Redundanzschaltung mit zehn Ein- und Ausgängen dargestellt, d.h. die Anzahl der Ein- und Ausgänge ist das Maximum von n und m. Die hier gezeigte Schaltung weist fünf Brückenschalter auf, d.h. Schalter die der Brückenbildung dienen und also nicht direkt mit einem Ein- oder Ausgang verbunden sind. Insgesamt sind somit fünfzehn Schalter in einem Ring angeordnet, wobei jeweils die gegenüberliegenden Anschlußpunkte 1,2 beispielsweise zweier benachbarter Schalter miteinander verbunden sind. Jeder dritte Schalter in diesem Ring ist ein Brückenschalter, sie sind über ihre anderen gegenüberliegenden Anschlußpunkte also 3 und 4 in einem weiteren Ring miteinander verbunden und zwar derart, daß jeweils die übernächsten Brückenschalter also die jeweils zweiten Brückenschalter miteinander verbunden sind. Zwischen den Brückenschaltern sind zwei Schalter angeordnet, die jeweils einen Ein- und Ausgang aufweisen. Die Schaltung ermöglicht höchste Flexibilität, d.h. sie kann gleichzeitig k Eingangstore m mit k Ausgangstoren n verbinden mit k ≤ m, n ≤ 10. Maximal sind dazu im ungünstigsten Fall fünf Schalterdurchgänge hintereinander geschaltet.
Für eine Anzahl von zwölf Ein- und Ausgängen benötigt der Ring sechs Brückenschalter, die in zwei Schleifen miteinander verbunden sind und jeweils ebenfalls den zweiten Brückenschalter erfaßt. Diese Ringschaltung, welche in Figur 3e im Grundprinzip dargestellt ist, weist ebenfalls volle Flexibilität, d.h. volle Erreichbarkeit auf. Bei Redundanzschaltungen mit acht Ein- und Ausgängen sind zur vollen Flexibilität jeweils mindestens vier Brückenschalter erforderlich, wobei bei vier Ein- bzw. Ausgängen die normalen Ein- und Ausschalter sich jeweils mit den Brückenschaltern in der Ringreihenfolge abwechseln, siehe Bild 3a).

Für den Fall einer ungleichen Anzahl von Ein- und Ausgängen also m ungleich n, wird der Ring entsprechend dem Maximum der beiden Zahlen aufgebaut, d.h. die Gesamtanzahl der Schalter richtet sich nach der höchsten Zahl von Ein- bzw. Ausgängen. Der Ring wird dann auf die richtige Zahl von Ein- bzw. Ausgängen reduziert, indem entsprechende Tore nicht beschaltet werden.

Die erfindungsgemäße flexible Redundanzschaltung erlaubt die Auswahl von k Verbindungen aus m Eingängen und legt diese auf k der n Ausgänge, dabei ist m, n ≥ k ≥ 1. Diese allgemeine Bedingung gilt jedoch nur für m, n ≤ 14. Die Schaltung für m, n = 14 zeigt Bild 3c, für m, n = 12 Bild 3b). Für m, n > 14 gilt zusätzlich: (m - k) ≤ 6.
Für den Fall einer ungeraden Anzahl von Ein- bzw. Ausgängen, z. B. 9, ist die Grundschaltung nach Bild 2 zu wählen, wobei der Schalter für Ein- und Ausgang 10 durch eine Brücke ersetzt wird, welche die gegenüberliegenden Anschlußpunkte 1,2 des benachbarten Brückenschalters bzw. des Schalters für Ein- und Ausgang 1 miteinander verbindet.

## Patentansprüche

1. Kanalauswahlschaltungen zu k verzweigungs- und verknüpfungsfreie Verbindungen zwischen m Eingängen und n Ausgängen mit Vier-Positions-R-Schaltern, welche vier Anschlußpunkte aufweisen, wobei in zwei Schalterstellungen jeweils ein gegenüberliegendes Anschlußpunktepaar (Position 3 und 4) und in weiteren zwei Schalterstellungen benachbarte Anschlußpunkte (Position 1 und 2) miteinander verbindbar sind, wobei zur beliebigen Auswahl von k Signalen aus einer beliebigen Zahl von m Eingangssignalen bei einer geringen Zahl von Schalterdurchgängen folgende Maßnahmen getroffen sind:
- eine Anzahl l Schalter mit l > m, n ist in einem Ring angeordnet, wobei jeweils benachbarte Schalter über ihre gegenüberliegenden Anschlußpunkte (1, 2) miteinander verbunden sind,
- höchstens jeder 3. Schalter dient als Brückenschalter, wobei beide Anschlußpunkte (3, 4) des weiteren Anschlußpunktepaares zur Bildung von Brückenschleifen dienen, und mindestens zwei Brückenschalter unmittelbar über ihre anderen gegenüberliegenden Anschlußpunkte (3, 4) miteinander verbunden sind, wobei der erste Anschlußpunkt (3) eines Brückenschalters zu jeweils einem Anschlußpunkt des in einer ersten Umlaufrichtung im Ring übernächsten Brückenschalters führt und der jeweils andere Anschlußpunkt (4) zu jeweils einem Anschlußpunkt des in Gegenrichtung zur ersten Umlaufrichtung übernächsten Brückenschalters führt,
- die im Ring zwischen den Brückenschaltern angeordneten Schalter sind mit ihren anderen gegenüberliegenden Anschlußpunkten (3, 4) jeweils mit einem der m Eingänge (E) und/oder einem der n Ausgänge (A) verbunden.

2. Kanalauswahlschaltung nach Anspruch 1, dadurch gekennzeichnet, daß jeweils jeder zweite Brückenschalter mit entsprechenden anderen Brückenschaltern zwei Schleifen bildet.

3. Kanalauswahlschaltung nach Anspruch 1, dadurch gekennzeichnet, daß jeweils Schleifen aus zwei übernächstbenachbarten Brückenschaltern, also der erste mit dem dritten, der zweite mit dem vierten Brückenschalter usw., gebildet werden.

4. Kanalauswahlschaltung nach Anspruch 1, dadurch gekennzeichnet, daß jeweils Schleifen mit jedem dritten Brückenschalter gebildet werden.

## Claims

1. Channel selection circuits for k branching-free and logic combination-free connections between m inputs and n outputs with four-position R switches having four terminal points, it being possible in each case to connect an opposite pair of terminal points to one another in two switch positions (positions 3 and 4) and adjacent terminal points to one another in two further switch positions (positions 1 and 2), the following measures being taken for any desired selection of k signals from any desired number of m input signals in conjunction with a small number of switch passages:
- a number l of switches, where l > m, n, are arranged in a ring, respectively adjacent switches being connected to one another via their opposite terminal points (1, 2),
- at most every 3rd switch serves as a bridge switch, the two terminal points (3, 4) of the further pair of terminal points serving to form bridge loops, and at least two bridge switches are connected to one another directly via their other opposite terminal points (3, 4), the first terminal point (3) of one bridge switch leading to a respective terminal point of that bridge switch which is next but one in a first circumferential direction in the ring, and the respective other terminal point (4) leading to a respective terminal point of that bridge switch which is next but one in the opposite direction to the first circumferential direction,
- the switches arranged in the ring between the bridge switches are connected by their other opposite terminal points (3, 4) in each case to one of the m inputs (E) and/or one of the n outputs (A).

2. Channel selection circuit according to Claim 1, characterized in that every second bridge switch in each case forms two loops with corresponding other bridge switches.

3. Channel selection circuit according to Claim 1, characterized in that respective loops comprising two alternate bridge switches, in other words the first with the third, the second with the fourth bridge switch, etc., are formed.

4. Channel selection circuit according to Claim 1, characterized in that respective loops with every third bridge switch are formed.

## Revendications

1. Circuits de sélection de canaux à k liaisons de ramification et sans combinaisons entre m entrées et n sorties avec des commutateurs R à quatre positions, qui présentent quatre points de raccordement, une paire de points de raccordement (position 3 et 4) dans deux positions de commutateurs et des points de raccordement voisins dans deux autres positions de commutateurs (position 1 et 2) pouvant être reliés ensemble, les mesures ci-après étant prises pour sélectionner à volonté k signaux à partir de n'importe quel nombre de m signaux d'entrée dans le cas d'un nombre plus faible de passages de commutateurs :
• un nombre l de commutateurs avec l > m, n est disposé dans un anneau, des commutateurs respectivement voisins étant reliés l'un à l'autre au moyen de leurs points de raccordement opposés (1, 2).
• au plus chaque troisième commutateur sert de commutateur de pont, deux points de raccordement (3, 4) de l'autre paire de points de raccordement servant à former des boucles de ponts, et au moins deux commutateurs de pont étant directement reliés par leurs autres points de raccordement opposés (3, 4), le premier point de raccordement (3) d'un commutateur de pont conduisant à respectivement un point de raccordement du commutateur de pont venant après le suivant dans un premier sens de rotation dans l'anneau et l'autre point de raccordement (4) conduisant respectivement à un point de raccordement du commutateur de pont, qui vient après le suivant, en sens contraire par rapport au premier sens de rotation,
• les commutateurs disposés dans l'anneau entre les commutateurs de pont sont reliés par leurs autres points de raccordement opposés (3, 4) respectivement à l'une des m entrées (E) et/ou à l'une des n sorties (A).

2. Circuit de sélection de canaux selon la revendication 1,
caractérisé en ce que
respectivement chaque deuxième commutateur de pont forme avec d'autres commutateurs correspondants de pont deux boucles.

3. Circuit de sélection de canaux selon la revendication 1,
caractérisé en ce que
respectivement on forme des boucles à partir de deux commutateurs de pont, venant après les suivants, c'est-à-dire le premier avec le troisième, le second avec le quatrième commutateur de pont, etc.

4. Circuit de sélection de canaux selon la revendication 1,
caractérisé en ce que
l'on forme respectivement des boucles avec chaque troisième commutateur de pont.
